# EUROPEAN PATENT APPLICATION

(11) **EP 3 410 317 A1**
(43) Date of publication of application: **05.12.2018**
(21) Application number: 18175335.1
(22) Date of filing: 31.05.2018
(51) Int. Cl.: G06F 17/30, G06Q 30/02

(54) **METHOD FOR PROVIDING A CUSTOMIZED PRODUCT RECOMMENDATION**

(30) Priority: 01.06.2017 US 201715610957
(71) Applicant: The Gillette Company LLC, Boston, MA 02127 (US)
(72) Inventor: ROBINSON, Susan Clare, Reading, Berkshire RG2 0QE (GB); BARKER, Matthew Lloyd, Mason, OH 45040 (US); FORSDIKE, Edward Neill, Reading, Berkshire RG2 0QE (GB); SHERMAN, Faiz Feisal, West Chester, OH 45069 (US); TRIVEDI, Sushant, Boston, MA 02127 (US)
(74) Representative: Kohol, Sonia

(57) **Abstract**

Included is a method for providing a customized product recommendation to a user. Images of people are collected from a database. A neural network is used to evaluate the images to identify a consumer trend. Information is collected from the user to determine if the user's style or desired style falls within the consumer trend. A product for the user is selected from at least two available products whose style falls within the consumer trend. The selected product is recommended to the user.

## Description

### FIELD OF THE INVENTION

The present invention relates generally to systems and methods for providing customized product recommendations and specifically to systems and methods for providing customized product recommendations for a user from information collected from a database.

### BACKGROUND OF THE INVENTION

A wide variety of products are marketed to consumers in the fashion and makeup industries. Such products include a footwear item, a clothing item, an accessory item, a jewelry item, a hair color, a nail polish item, and/or a makeup item. With such a wide variety of products to choose from and each for different purposes and/or benefit it is not uncommon for a user to have difficulty determining which product or combination of products should be used for their desired style. In addition, as trends in styles change it is difficult for a user to determine which products are best to be used to obtain and maintain the style they desire.

A variety of methods have been used to provide customized product recommendations to users. For example, some methods use a feature-based analysis in which one or more features of a skin condition (e.g., fine lines, wrinkles, spots, uneven skin tone) are detected in a captured image (e.g., a digital photo) by looking for features that meet a definition are commonly used. However, such systems have not addressed the consumer needs for obtaining a style that fits within an identified consumer trend.

Accordingly, there remains a need to provide a customized product recommendation to a user or group of users that are trying to obtain and maintain a particular style within an identified consumer trend.

### SUMMARY OF THE INVENTION

A method for providing a customized product recommendation to a user/individual and/or a group of individuals/users is provided. A plurality of images of a plurality of people are collected from a database. A neural network is used in evaluating the images to identify a consumer trend. Information from a user or group of users is collected to determine if the user or group of user's style or desired style falls within the consumer trend. A product is selected from at least two available products for the user or group of users whose style or desired style falls within for the consumer trend. The selected product is recommended to the user.

The consumer trend may be a fashion trend and/or a makeup trend.

The fashion trend may be a clothing trend, a footwear trend, an accessory trend, a hair color trend, a hair style trend, a nail polish trend and/or a jewelry trend.

The makeup trend may be a concealer/color corrector trend, a foundation trend, a blush trend, a bronzing trend, a highlighting trend, a contouring trend, a mascara trend, an eye liner trend, an eye shadow trend, a brow trend, an eyelash trend, a lipstick/lip gloss/lip stain trend and/or a makeup applicator such as a brush or sponge trend.

The products comprise a footwear item, a clothing item, an accessory item, a jewelry item, and/or a makeup item.

The footwear item may be a boot, a shoe, a sandal, a slipper and a sock.

The clothing item may be a shirt, a blouse, a sweater, a pair of pants, a pair of shorts, a dress, a skirt, a pair of tights/stockings and a jacket.

The accessory item may be a belt, a wallet, a handbag, a scarf, a hair band, a hair slide/barrette and a hat.

The jewelry item may be a ring, a watch, a bracelet, a necklace, a pin, and an earring.

The makeup item may be a concealer, a color corrector, a foundation, a blush, a bronzer, a highlighter, a contouring product, a mascara, an eye liner, an eye shadow, a brow pencil, a false eyelash, a lipstick, a lip gloss, a lip stain, and/or a makeup applicator.

The database is a social media database. The database may be an online database.

The information is collected using a computing device. The computing device comprises a mobile device, a tablet, a handheld device, and a desktop device. The images comprise pictorial images, photograph images, videos, images from videos, and digital images.

### BRIEF DESCRIPTION OF THE DRAWINGS

It is to be understood that both the foregoing general description and the following detailed description describe various embodiments and are intended to provide an overview or framework for understanding the nature and character of the claimed subject matter. The accompanying drawings are included to provide a further understanding of the various embodiments and are incorporated into and constitute a part of this specification. The drawings illustrate various embodiments described herein, and together with the description serve to explain the principles and operations of the claimed subject matter.
FIG. 1 depicts a computing environment for providing customized product recommendations, according to embodiments described herein.
FIG. 2 depicts a structure of a convolutional neural network that may be utilized for identifying features of an image/video, according to embodiments described herein.
FIG. 3 depicts a flow chart of a method for providing a customized product recommendation to a user or a group of users.
FIG. 4 depicts a chart showing types of fashion trends.
FIG. 5 depicts a chart showing types of makeup trends.
FIG. 6 depicts a chart showing footwear items and products to be selected from.
FIG. 7 depicts a chart showing clothing items and products to be selected from.
FIG. 8 depicts a chart showing accessory items and products to be selected from.
FIG. 9 depicts a chart showing jewelry items and products to be selected from.
FIG. 10 depicts a chart showing makeup items and products to be selected from.

### DETAILED DESCRIPTION OF THE INVENTION

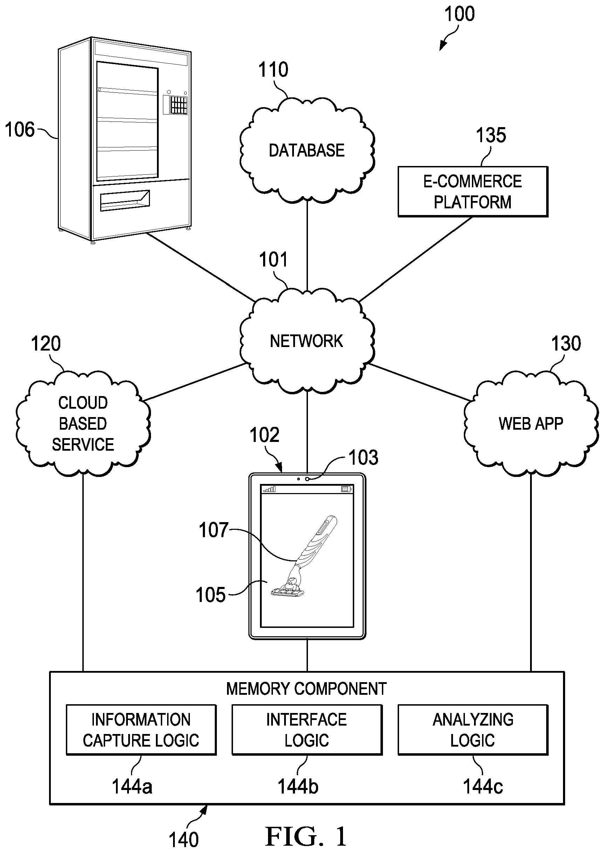

FIG. 1 depicts a system 100 for collecting information from a database, analyzing the information, and providing a customized product recommendation. The system 100 may include a network 101, which may be embodied as a wide area network (such as a mobile telephone network, a public switched telephone network, a satellite network, the internet, etc.), a local area network (such as wireless-fidelity, Wi-Max, ZigBee™, Bluetooth™, etc.), and/or other forms of networking capabilities. Coupled to the network 101 are a computing device 102, a kiosk computing device 106, a database 110, and a cloud based service 120, a web app 130, and/or an e-commerce platform 135.

The computing device 102 may be a mobile device, a handheld device, a mobile telephone, a tablet, a laptop, a personal digital assistant, a desktop device, a desktop computer and/or other computing device configured for collecting, capturing, storing, and/or transferring information such as voice information, pictorial information, video information, written questionnaire and/or digital information such as a digital photograph. Accordingly, the computing device 102 may comprise an image capture device 103 such as a digital camera and may be configured to receive images from other devices (device can capture 2D or 3D information about the surrounding). The computing device 102 may comprise an image display screen 105 to display an image of a person or a product such as a multi-blade razor 107. The computing device 102 may include a memory component 140, which stores information capture logic 144a, interface logic 144b and analyzing logic 144c. The memory component 140 may include random access memory (such as SRAM, DRAM, etc.), read only memory (ROM), registers, and/or other forms of computing storage hardware. The information capture logic 144a, the interface logic 144b and the analyzing logic 144c may include software components, hardware circuitry, firmware, and/or other computing infrastructure, as described herein. The information capture logic 144a may facilitate capturing, storing, preprocessing, analyzing, transferring, and/or performing other functions on collected information from a user. The interface logic 144b may be configured for providing one or more user interfaces to the user, which may include questions, options, and the like. The analyzing logic 144c may facilitate processing, analyzing, transferring and/or performing other functions on collected information from a user for selecting a product to be recommended to a user. The mobile computing device 102 may also be configured for communicating with other computing devices via the network 101. The devices may also be linked to an e-commerce platform 135 to enable the user to purchase the product(s) being recommended. The device can also be used to simply move data to and from the cloud where the analysis and storage can be.

The system 100 may also comprise a kiosk computing device 106. The kiosk computing device 106 may operate similar to the computing device 102 but may also be able to dispense one or more products and/or receive payment in the form of cash or electronic transactions.

It should be understood that while the kiosk computing device 106 is depicted as a vending machine type of device, this is merely an example. Some embodiments may utilize a mobile device that also provides payment and/or production dispensing. As a consequence, the hardware and software depicted for the computing device 102 may be included in the kiosk computing device 106 and/or other devices.

The system 100 may also comprise a database 110. Database 110 may be any database capable of collecting and storing images of people. Examples of suitable databases include but are not limited to Facebook, Google, YouTube, Instagram. Pinterest and Snapchat. The images may comprise pictorial images, photograph images, videos, images from videos and digital images, embedded and un-embedded text, audio, etc.

The system 100 may also comprise a cloud based service 120. The cloud based service 120 may include a memory component 140, which stores information capture logic 144a, interface logic 144b and analyzing logic 144c. The memory component 140a may include random access memory (such as SRAM, DRAM, etc.), read only memory (ROM), registers, and/or other forms of computing storage hardware. The information capture logic 144a, the interface logic 144b and the analyzing logic 144c may include software components, hardware circuitry, firmware, and/or other computing infrastructure, as described herein. The information capture logic 144a may facilitate capturing, storing, preprocessing, analyzing, transferring, and/or performing other functions on collected information from a user. The interface logic 144b may be configured for providing one or more user interfaces to the user, which may include questions, options, and the like. The analyzing logic 144c may facilitate processing, analyzing, transferring and/or performing other functions on collected information from a user for selecting a product to be recommended to a user.

The system 100 may also comprise a web app 130. The web app 130 may include a memory component 140, which stores information capture logic 144a, interface logic 144b and analyzing logic 144c. The memory component 140 may include random access memory (such as SRAM, DRAM, etc.), read only memory (ROM), registers, and/or other forms of computing storage hardware. The information capture logic 144a, the interface logic 144b and the analyzing logic 144c may include software components, hardware circuitry, firmware, and/or other computing infrastructure, as described herein. The information capture logic 144a may facilitate capturing, storing, preprocessing, analyzing, transferring, and/or performing other functions on collected information from a user. The interface logic 144b may be configured for providing one or more user interfaces to the user, which may include questions, options, and the like. The analyzing logic 144c may facilitate processing, analyzing, transferring and/or performing other functions on collected information from a user for selecting a product to be recommended to a user.

To provide a customized product recommendation to a user a plurality of images from a plurality of people are collected from database 110. A neural network is used to evaluate the collected images to identify a consumer trend.

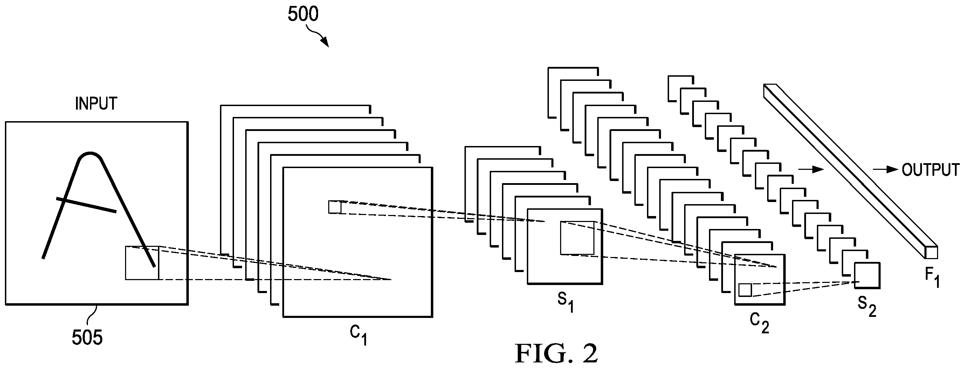

Fig. 2 depicts a structure of one type of neural network 500 known as a convolutional neural network (CNN) that may be utilized for identifying a feature of an image, according to embodiments described herein. The CNN 500 may include an inputted image 505, one or more convolution layers C1, C2, one or more subsampling layers S1 and S2, one or more partially connected layers, one or more fully connected layers, and an output. To begin an analysis or to train the CNN, an image 505 is inputted into the CNN 500 (e.g., the image of a person or a user). The CNN may sample one or more portions of the image to create one or more feature maps in a first convolution layer C1. For example, as illustrated in FIG. 2, the CNN may sample six portions of the image 505 to create six feature maps in the first convolution layer C1. Next, the CNN may subsample one or more portions of the feature map(s) in the first convolution layer C1 to create a first subsampling layer S1. In some instances, the subsampled portion of the feature map may be half the area of the feature map. For example, if a feature map comprises a sample area of 28 x 28 pixels from the image 505, the subsampled area may be 14 x 14 pixels. The CNN 500 may perform one or more additional levels of sampling and subsampling to provide a second convolution layer C2 and a second subsampling layer S2. It is to be appreciated that the CNN 500 may include any number of convolution layers and subsampling layers as desired. Upon completion of the final subsampling layer (e.g., layer S2 in FIG. 2), the CNN 500 generates a fully connected layer F1, in which every neuron is connected to every other neuron. From the fully connected layer F1, the CNN can generate an output such as a predicted style. The CNN can be trained to a style by either of the three ways. It can be understood that an ensemble of CNN can be used or CNN can be used with other machine learning methods such as recurrent neural network, support vector machines, K-mean nearest neighbor, etc.

In the first way, the convolutional neural network is trained with pre-identified styles based on current trends. The users input data will be predicted against these retrained classes. The pre-identified styles are continuously compared to a population distribution and as distribution shifts the trained classes will be updated and recommendations are made as needed based on the current classes.

In the second way, the convolutional neural network is trained as in the first way and there are four (4) pre-trained classes, class A, B, C, and D for example. The convolutional neural network outputs probabilities of A, B, C, and D. In one instance one can take the largest probability and can call it the class. If one assumes the following image probabilities for the example: A = 0.7, B= 0.2, C= 0.9, D = 0.1 (all add to 1) one can say that the image is class A. Alternatively, if the image probabilities for the example are: A = 0.4, B= 0.4, C= 0.3, D = 0.1 (all add to 1), one might be able to say that there might be a new class that sits between class A and class B. If for example class A is a sandal and class B is a shoe, therefore maybe this image might be a slipper. The recommendation is made on the mix probabilities of the predictions.

In the third way one uses a convolutional neural network similar to the one in FaceNet in order to encode the clusters of styles. Using Euclidean distance (ED) one can assign to one of the pre ID clusters or dynamically form new clusters based on the ED space. One way to determine the formation of a cluster could be 10% of the images are falling into this new cluster. Clustering can be done automatically but the categorization has to be done by a human. The users input data will be predicted against these dynamic classes.

From one of the first three ways a consumer trend is identified. The consumer trend may be a fashion trend and/or a makeup trend.

Similarly, to identifying a consumer trend a CNN can be used to determine if a user or a group of user's style or desired style falls within the identified trend. To do this information from the user is collected. The information collected is preferably an image of the user or group of users. Or the image collected may be an image of a desired style. A convolutional neural network, such as CNN 500, is used to evaluate the user image to determine if the user image falls within the identified consumer trend. If the image falls within the identified consumer trend the user's style or desired style, then falls within the consumer trend. This approach can be used to track many other trends and make a custom recommendation to user based on trend and their current data.

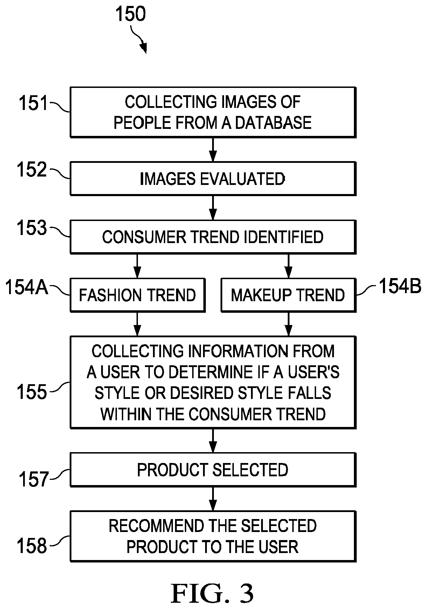

Referring now to FIG. 3 a flow chart 150 is shown. Flow chart 150 includes a method for providing a customized product recommendation to a user. At 151 images of people, individuals are collected from a database. The collected images 151 are then evaluated at 152. The images are evaluated using a neural network as described previously. Based on the collected and evaluated information 151, 152, a consumer trend is identified at 153. The consumer trend may be a fashion trend 154A and/or a makeup trend 154B. Information is collected from a user to determine if the user's style or desired style falls within the consumer trend 155. A product is selected at 157 for the user or group of users whose style or desired style falls within the identified consumer trend 154A-154B. The product selection 157 is performed from at least two available products. The selected product is then recommended to the user 158. After product selection 157 is complete, the selected product is recommended to the user. The recommended product allows the user to maintain or obtain the identified consumer trend.

The collection of images may occur on any desired timing or frequency allowing the trends to be identified as desired. For example, the collection may happen daily, several times a day, once a week, once a month, etc. Machine learning (e.g., heuristics) may be used to determine the consumer trends. The microcontroller is configured to adaptively adjust (e.g., using heuristic learning) to identify new consumer trends from the collected images.

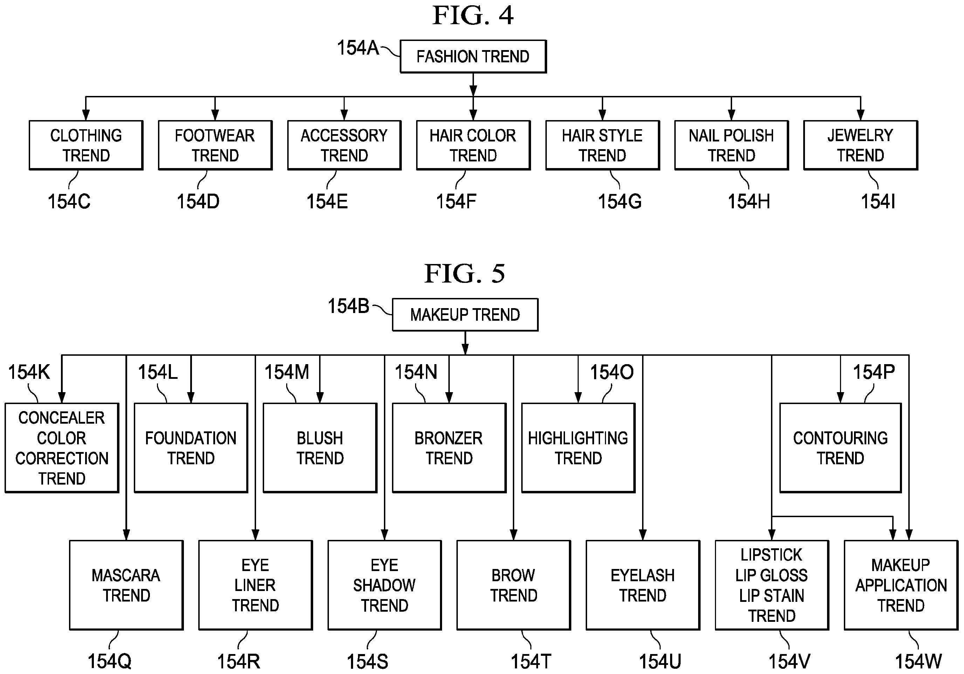

Referring now to Fig. 4, the fashion trend 154A may comprise a clothing trend 154C, a footwear trend 154D, an accessory trend 154E, a hair color trend 154F, a hair style trend 154G, a nail polish trend 154H and/or a jewelry trend 1541.

Referring now to Fig. 5, the makeup trend 154B may comprise a concealer/color correction trend 154K, a foundation trend 154L, a blush trend 154M, a bronzer trend 154N, a highlighting trend 154O, a contouring trend 154P, a mascara trend 154Q, an eye liner trend 154R, an eye shadow trend 154S, a brow trend 154T, an eyelash trend 154U, a lipstick/lip gloss/lip stain trend 154V and/or a makeup applicator trend 154W.

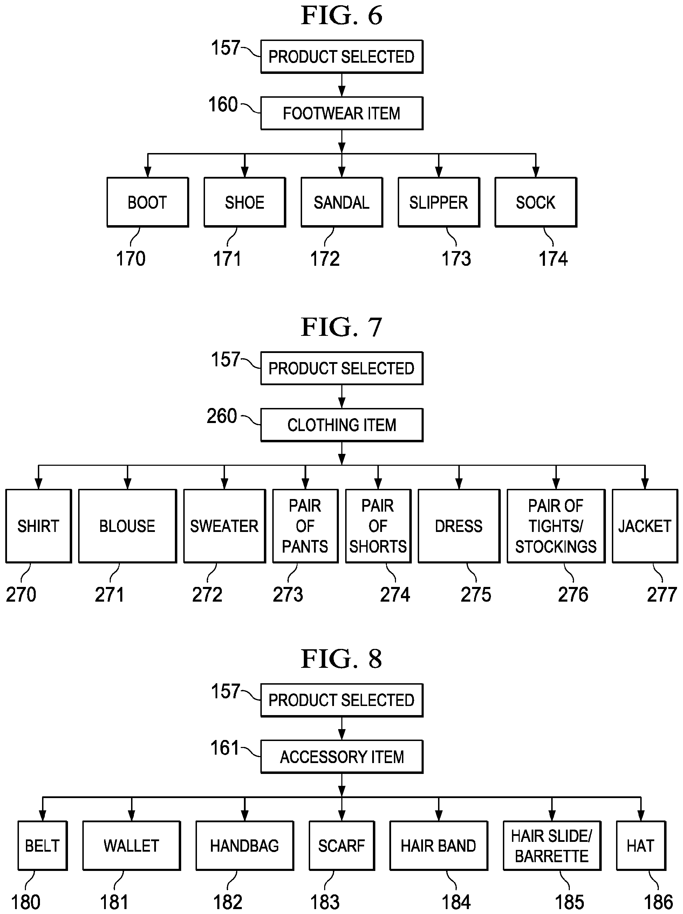

Referring now to FIG. 6, there is shown product selection 157 of a footwear item or product 160. Footwear products to be selected from comprise a boot 170, a shoe 171, a sandal 172, a slipper 173, and a sock 174.

Referring now to FIG. 7, there is a shown product selection 157 of a clothing item or product 260. Clothing products to be selected from comprise a shirt 270, a blouse 271, a sweater 272, a pair of pants 273, a pair of shorts 274, a dress 275, a pair of tights/stockings 276 and a jacket 277.

Referring now to FIG. 8, there is shown another product selection 157 of an accessory item or product 161. Accessory items or products to be selected from comprise a belt 180, a wallet 181, a handbag 182, a scarf 183, a hair band 184, a hair slide/barrette 185 and a hat 186.

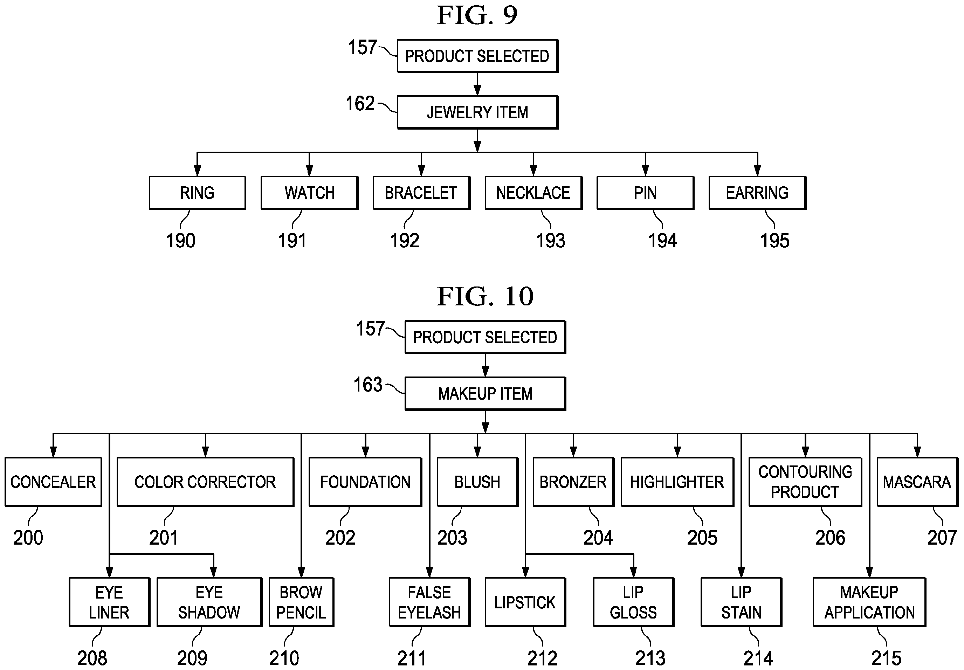

Referring now to FIG. 9, there is shown another product selection 157 of a jewelry item or product 162. Jewelry items or products to be selected from comprise a ring 190, a watch 191, a bracelet 192, a necklace 193, a pin 194 and an earring 195.

Referring now to FIG. 10 there is shown another product selection 157 of a makeup item or product 163. Makeup items and products to be selected from comprise a concealer 200, a color corrector 201, a foundation 202, a blush 203, a bronzer 204, a highlighter 205, a contouring product 206, a mascara 207, an eye liner 208, an eye shadow 209, a brow pencil 210, a false eyelash 211, a lipstick 212, a lip gloss 213, a lip stain 214 and a makeup applicator 215 such as a brush or a sponge.

The information collected may also be used to provide users with styling tips and guidance. For example, with some trends information about styling tips and guidance may be useful to enable the user to achieve and maintain the desired style especially if the style is new to the user.

The information collected may also be used to predict product manufacturing, volume and distribution to address the needs of a current trend. For example, a trend may require the use of a particular product to obtain and/or maintain the trend. With the trend identified a company can produce that product in the right quantities and distribute to the right locations. In addition, the information collected may also be used to develop marketing materials to communicate the trends and the accompanying products to be used with the trends. For example, the information may be used to generate and provided tailored messaging to users practicing a current trend. The information collected may also be used to guide the efforts of product research and development. For example, if a trend is identified and the currently available products are not optimum for addressing the needs of the trend new products may need to be developed to optimize the product performance associated with the trend.

### COMBINATIONS

An example is below:
A. A method for providing a customized product recommendation to a user comprising the steps of:
   a. collecting a plurality of images of a plurality of people from a database;
   b. using a neural network in evaluating the images to identify a consumer trend;
   c. collecting information from the user to determine if the user's style or desired style falls within the consumer trend;
   d. selecting a product from at least two available products for the user whose style or desired style falls within the consumer trend; and
   e. recommending the selected product to the user.
B. The method of Paragraph A, wherein the consumer trend is a fashion trend and/or a makeup trend.
C. The method of Paragraph A, wherein the fashion trend comprises a clothing trend, a footwear trend, an accessory trend, a hair color trend, a hair style trend, a nail polish trend and/or a jewelry trend.
D. The method of Paragraph A, wherein the makeup trend comprises a concealer/color corrector trend, a foundation trend, a blush trend, a bronzing trend, a highlighting trend, a contouring trend, a mascara trend, an eye liner trend, an eye shadow trend, a brow trend, an eyelash trend, a lipstick trend, a lip gloss trend, a lip stain trend, and/or a makeup applicator trend.
E. The method of either Paragraph A or B, wherein the product comprises a footwear item, a clothing item, an accessory item, a jewelry item, and/or a makeup item.
F. The method of Paragraph E, wherein the footwear item comprises a boot, a shoe, a sandal, a slipper and a sock.
G. The method of Paragraph E, wherein the clothing item comprises a shirt, a blouse, a sweater, a pair of pants, a pair of shorts, a dress, a skirt, a pair of tights/stockings and a jacket.
H. The method of Paragraph E, wherein the accessory item comprises a belt, a wallet, a handbag, a scarf, a hair band, a hair slide/barrette and a hat.
I. The method of Paragraph E, wherein the jewelry item comprises a ring, a watch, a bracelet, a necklace, a pin, and an earring.
J. The method of Paragraph E, wherein the makeup item comprises a concealer, a color corrector, a foundation, a blush, a bronzer, a highlighter, a contouring product, a mascara, an eye liner, an eye shadow, a brow pencil, a false eyelash, a lipstick, a lip gloss, a lip stain and/or a makeup applicator.
K. The method of any one of Paragraphs A-J, wherein the database is a social media database.
L. The method of any one of Paragraphs A-K, wherein the database is an online database.
M. The method of any one of the Paragraphs A-L, wherein the information is analyzed using a computing device.
N. The method of Paragraph M, wherein the computing device comprises a mobile device, a tablet, a handheld device and a desktop device.
O. The method of any one of Paragraphs A-N, wherein the images comprise pictorial images, photograph images, videos, images from videos and digital images.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

Every document cited herein, including any cross referenced or related patent or application and any patent application or patent to which this application claims priority or benefit thereof, is hereby incorporated herein by reference in its entirety unless expressly excluded or otherwise limited. The citation of any document is not an admission that it is prior art with respect to any invention disclosed or claimed herein or that it alone, or in any combination with any other reference or references, teaches, suggests or discloses any such invention. Further, to the extent that any meaning or definition of a term in this document conflicts with any meaning or definition of the same term in a document incorporated by reference, the meaning or definition assigned to that term in this document shall govern.

While particular embodiments of the present invention have been illustrated, and described, it would be obvious to those skilled in the art that various other changes and modifications can be made without departing from the spirit and scope of the invention. It is therefore intended to cover in the appended claims all such changes and modifications that are within the scope of this invention.

## Claims

1. A method for providing a customized product recommendation to a user comprising the steps of:
a. collecting a plurality of images of a plurality of people from a database;
b. using a neural network in evaluating the images to identify a consumer trend;
c. collecting information from the user to determine if the user's style or desired style falls within the consumer trend;
d. selecting a product from at least two available products for the user whose style or desired style falls within the consumer trend; and
e. recommending the selected product to the user.

2. The method of claim 1, wherein the consumer trend is a fashion trend and/or a makeup trend.

3. The method of claim 1, wherein the fashion trend comprises a clothing trend, a footwear trend, an accessory trend, a hair color trend, a hair style trend, a nail polish trend and/or a jewelry trend.

4. The method of claim 1, wherein the makeup trend comprises a concealer/color corrector trend, a foundation trend, a blush trend, a bronzing trend, a highlighting trend, a contouring trend, a mascara trend, an eye liner trend, an eye shadow trend, a brow trend, an eyelash trend, a lipstick trend, a lip gloss trend, a lip stain trend, and/or a makeup applicator trend.

5. The method of either claim 1 or 2, wherein the product comprises a footwear item, a clothing item, an accessory item, a jewelry item, and/or a makeup item.

6. The method of claim 5, wherein the footwear item comprises a boot, a shoe, a sandal, a slipper and a sock.

7. The method of claim 5, wherein the clothing item comprises a shirt, a blouse, a sweater, a pair of pants, a pair of shorts, a dress, a skirt, a pair of tights/stockings and a jacket.

8. The method of claim 5, wherein the accessory item comprises a belt, a wallet, a handbag, a scarf, a hair band, a hair slide/barrette and a hat.

9. The method of claim 5, wherein the jewelry item comprises a ring, a watch, a bracelet, a necklace, a pin, and an earring.

10. The method of claim 5, wherein the makeup item comprises a concealer, a color corrector, a foundation, a blush, a bronzer, a highlighter, a contouring product, a mascara, an eye liner, an eye shadow, a brow pencil, a false eyelash, a lipstick, a lip gloss, a lip stain and/or a makeup applicator.

11. The method of any one of the preceding paragraphs, wherein the database is a social media database.

12. The method of any one of the preceding paragraphs, wherein the database is an online database.

13. The method of any one of the preceding paragraphs, wherein the information is analyzed using a computing device.

14. The method of claim 13, wherein the computing device comprises a mobile device, a tablet, a handheld device and a desktop device.

15. The method of any one of the preceding paragraphs, wherein the images comprise pictorial images, photograph images, videos, images from videos and digital images.
